# EUROPÄISCHE PATENTSCHRIFT

(11) **EP 0 813 017 B1**
(45) Veröffentlichungstag und Bekanntmachung des Hinweises auf die Patenterteilung: **08.05.2002**
(21) Anmeldenummer: 97108371.2
(22) Anmeldetag: 23.05.1997
(51) Int. Cl.: F16L 37/08, F16L 37/084, F16L 37/088

(54) **Steckkupplung für Druckmittelsysteme**
Plug connector for pressure systems
Raccord emboîtable pour systèmes sous pression

(30) Priorität: 14.06.1996 DE 29610496 U
(43) Veröffentlichungstag der Anmeldung: 17.12.1997
(73) Patentinhaber: Voss Automotive GmbH, 51688 Wipperfürth (DE)
(72) Erfinder: Hagen, Harald, Dipl.Ing., 51688 Wipperfürth (DE); Kaminski, Volker, 58553 Halver (DE); Berg, Manfred, 51688 Wipperfürth (DE)
(74) Vertreter: Zapf, Christoph, Dipl.-Ing.

(56) Entgegenhaltungen:
- EP-A- 0 226 689
- EP-A- 0 724 109
- EP-A- 0 766 033

## Beschreibung

Die vorliegende Erfindung betrifft eine Steckkupplung für Druckmittelsysteme, bestehend aus zwei Kupplungsteilen, und zwar einem Aufnahmeteil und einem Steckerteil, wobei das Steckerteil mit einem Steckerschaft umfangsgemäß abgedichtet in eine Aufnahmeöffnung des Aufnahmeteils einsteckbar und in einer Steckposition über eine Verriegelungseinrichtung gegen Lösen arretierbar ist, wobei die Verriegelungseinrichtung mindestens ein elastisches, in einer Ausnehmung des einen Kupplungsteils gelagertes und in der Steckposition eine Rastkante des anderen Kupplungsteils rastend hintergreifendes Halteelement aufweist.

Eine derartige Steckkupplung ist beispielsweise aus der EP-B-0 005 865 bekannt. Solche Steckkupplungen werden beispielsweise in Kraftfahrzeugbremssystemen, insbesondere bei Lkw-Luftdruckbremsanlagen, eingesetzt. Vor allem - aber natürlich nicht nur - bei diesem Anwendungsfall besteht das Problem, daß in manchen Fällen, wie bei ungünstigen Platzverhältnissen bzw. Einbausituationen, der Monteur beim Stecken nicht sorgfältig genug auf ein korrektes, vollständiges Stecken achtet, so daß in der Praxis Prüfvorgänge eingeschaltet werden müssen, um zu verhindern, daß bei einer Druckbeaufschlagung, beispielsweise beim Aufbau von Bremsdruck, die Kupplung plötzlich ungewollt getrennt wird.

Aus der EP-B 0 226 689 ist eine "Kupplungsvorrichtung" bekannt, bei der zur Vermeidung der beschriebenen Probleme schon im noch nicht ganz korrekt gesteckten Zustand der Kupplungsteile eine "Vorrastung" gewährleistet ist, die es verhindert, daß bei Druckbeaufschlagung die Kupplung ganz getrennt wird. Diese Ausführung macht jedoch einen zusätzlichen Aufwand im Bereich der Verriegelungseinrichtung erforderlich.

Der vorliegenden Erfindung liegt die Aufgabe zugrunde, eine Steckkupplung der gattungsgemäßen Art zu schaffen, die auf konstruktiv und herstellungsmäßig besonders günstige Weise eine hohe Sicherheit gegen Steckfehler gewährleistet.

Die vorliegende Erfindung wird von den Merkmalen des Anspruchs 1 definiert.

Durch die Erfindung kann zum Beispiel durch einen die Steckkupplung manuell steckenden Monteur dieser Anstieg der Steckkraft dadurch bemerkt werden, daß er für ihn durch einen deutlichen Widerstand spürbar ist. Der Kraftanstieg könnte aber auch - im Falle eines eventuellen maschinellen Steckens - durch geeignete Mittel meßtechnisch erfaßt werden. Das Auftreten dieses Steckkraftanstieges ist ein sicheres Indiz dafür, daß die Steckposition, d.h. die Verriegelung des Steckerteils, auch tatsächlich erreicht wurde, weil der Kraftanstieg erfindungsgemäß erst frühestens dann auftreten kann, wenn das Halteelement sicher eingerastet ist. Durch die Erfindung wird somit die Gefahr von Steckfehlern ganz wesentlich reduziert, wenn nicht sogar gänzlich eliminiert, sofern bestimmungsgemäß der Steckvorgang auch tatsächlich bis zum "Punkt des deutlichen Kraftanstieges" vollständig durchgeführt wird.

Für den gegenteiligen Fall, daß beispielsweise beim manuellen Stecken der Monteur den Steckvorgang bereits vor Erreichen der erfindungsgemäßen Anschlagstellung und damit vor Auftreten des Steckkraftanstieges beenden sollte, kann es vorteilhaft sein, die Verriegelungseinrichtung derart auszubilden, daß einerseits eine ganz gesteckte, der beschriebenen Steckposition entsprechende Vollraststellung sowie andererseits eine Vorarretierung in einer teilgesteckten Stellung gewährleistet sind. Vorzugsweise ist hierbei - im wesentlichen entsprechend der eingangs erwähnten EP-B-0 226 689 - vorgesehen, daß in der teilgesteckten Stellung eine derart unvollständige Abdichtung vorliegt, daß im Falle einer Druckbeaufschlagung mit einem Druckmedium ein Signal insbesondere in Form eines akustisch wahrnehmbaren Leckgeräusches erzeugt wird. In der Vollraststellung liegt dann natürlich eine vollständige, druckdichte Abdichtung vor. Hierbei ist das Auftreten des Signals ein Indiz für das noch nicht korrekt erfolgte Stecken, so daß dann die Kupplung in die Vollraststellung überführt werden kann. Es wird aber vermieden, daß die Kupplungsteile vollständig voneinander getrennt werden könnten. In Verbindung mit dieser bevorzugten Ausgestaltung der Steckkupplung mit "Doppelrastung" bzw. "Doppelarretierung" ist das erfindungsgemäße Anschlagelement so konzipiert, daß der "Punkt des deutlichen Kraftanstieges" in oder kurz hinter der Vollraststellung auftritt, da diese der Steckposition entspricht.

Im Zusammenhang mit der Erfindung ist das Anschlagelement elastisch ausgebildet, so daß ein "elastischer Anschlag" gewährleistet ist; denn aufgrund unvermeidbarer Herstellungstoleranzen wäre ein "starrer Anschlag" nur unter großem Herstellungsaufwand zu realisieren.

Weitere vorteilhafte Ausgestaltungsmerkmale der Erfindung sind in den Unteransprüchen enthalten und werden anhand der nachfolgenden Beschreibung noch genauer erläutert werden.

Anhand eines in der Zeichnung dargestellten, bevorzugten Ausführungsbeispiels soll nun die Erfindung näher erläutert werden. Dabei zeigen:
- Fig. 1: einen Teil-Axialschnitt einer erfindungsgemäßen Steckkupplung beispielhaft mit Doppelrastung, wobei in der linken Figurenhälfte (Fig. 1a) eine Vollraststellung und in der rechten Figurenhälfte (Fig. 1b) eine Vorraststellung veranschaulicht sind, und
- Fig. 2: ein vereinfachtes, schematisches Diagramm der Steckkraft in Abhängigkeit vom Steckweg.

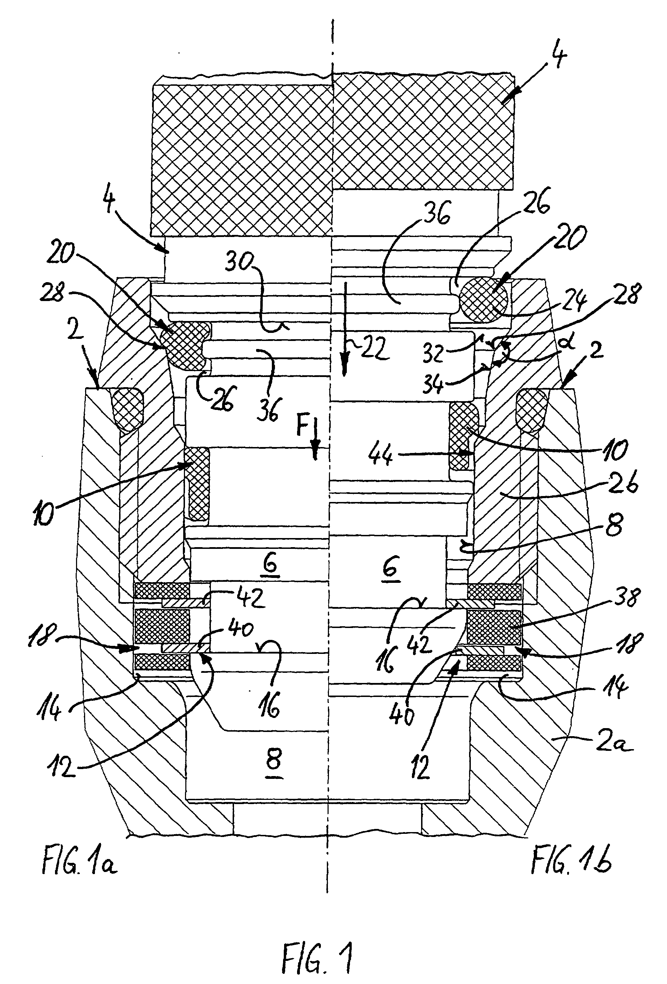

Gemäß Fig.1 besteht eine erfindungsgemäße Steckkupplung aus einem Aufnahmeteil 2 und einem Steckerteil 4. Das Steckerteil 4 ist mit einem Steckerschaft 6 in eine Aufnahmeöffnung 8 des Aufnahmeteils 2 einsteckbar und hierbei über mindestens eine Umfangsdichtung 10 gegen die Aufnahmeöffnung 8 abgedichtet sowie über eine Verriegelungseinrichtung 12 in der ganz eingesteckten Steckposition gegen Lösen arretierbar (vgl. Fig. 1a).

Die Verriegelungseinrichtung 12 weist mindestens ein radialelastisches, in einer Ausnehmung 14 des einen Kupplungsteils, in der dargestellten, bevorzugten Ausführungsform in einer als Innenringnut ausgebildeten Ausnehmung 14 des Aufnahmeteils 2, gelagertes und in der Steckposition eine Rastkante 16 des anderen Kupplungsteils, wie dargestellt bevorzugt des Steckerteils 4, formschlüssig rastend hintergreifendes Halteelement 18 auf.

Erfindungsgemäß ist zwischen den beiden Kupplungsteilen 2, 4 ein Anschlagelement 20 derart vorgesehen, daß bei der Einsteckbewegung des Steckerteils 4 (Pfeilrichtung 22 gemäß Fig. 1) frühestens bei Erreichen oder kurz hinter Erreichen der Steckposition (Fig. 1a) durch das bereichsweise axial zwischen den Kupplungsteilen 2,4 einen Anlagekontakt bewirkende Anschlagelement 20 ein erfaßbarer Anstieg der zum Stecken aufzuwendenden Steckkraft F hervorgerufen wird. Dabei ist das Anschlagelement 20 elastisch ausgebildet, so daß es sich erfindungsgemäß um einen "elastischen Anschlag" handelt.

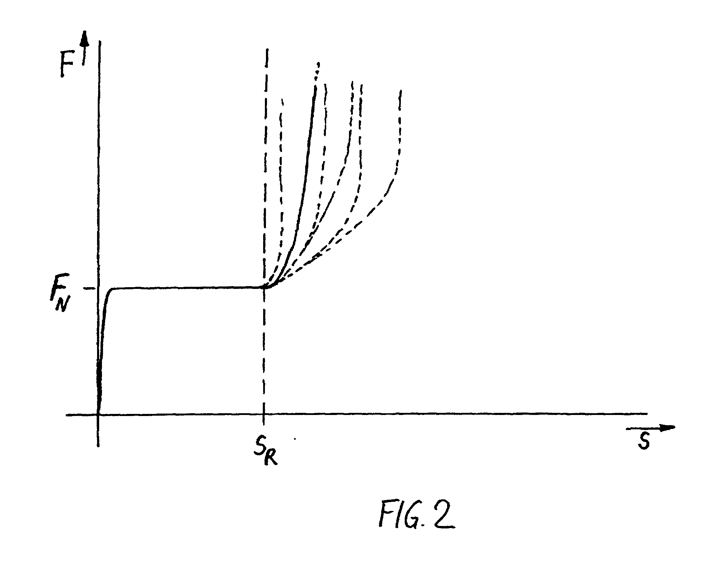

In Fig. 2 ist ein Diagramm der zum Stecken aufzuwendenden Steckkraft F in Abhängigkeit vom Steckweg s veranschaulicht, wobei dieses Diagramm insofern stark vereinfacht ist, als hierbei alle durch zur Anlage kommende Dichtungselemente sowie durch die Verriegelungseinrichtung bewirkte Änderungen der Steckkraft F in der Kennlinie nicht veranschaulicht sind. Ausgehend vom Ursprung erfolgt zunächst beim beginnenden Eintritt des Steckerschaftes 6 in die Aufnahmeöffnung 8 des Aufnahmeteils 2 ein Anstieg auf eine "normale" Steckkraft F_{N}. Wenn dann in der Steckposition S_{R} die rastende Arretierung obligatorisch erreicht wurde, erfolgt ein sprunghafter Anstieg der Kraft F, und zwar in Abhängigkeit von der Elastizität des erfindungsgemäßen Anschlagelementes 20 mehr oder weniger steil, d.h. entsprechend der jeweiligen Federkennlinie des elastischen Anschlagelementes 20. Diese ansteigende Kennlinie ab dem Punkt s_{R} kann durch Wahl des Materials und/oder der Raumform, inbesondere des Querschnittes, des Anschlagelementes 20 und/oder durch die Ausgestaltung der Anlagebereiche der beiden Kupplungsteile 2,4 in einem weiten Bereich nahezu beliebig gestaltet werden. Dies ist in Fig. 2 durch einige verschiedene, gestrichelt eingezeichnete Rennlinien beispielhaft angedeutet.

Das Anschlagelement 20 ist als ein aus einem elastisch verformbaren Material bestehender Ring 24 ausgebildet, der in einer radialen Ausnehmung des einen Kupplungsteils, insbesondere in einer Außenringnut 26 des Steckerteils 4, sitzt und mit einer Stufenkante 28 des anderen Kupplungsteils, insbesondere mit einer den Querschnitt der Aufnahmeöffnung B reduzierenden Stufenkante 28 des Aufnahmeteils 2, zusammenwirkt. Dies bedeutet, daß das Anschlagelement 20 in der Steckposition (Fig. 1a) axial zwischen einer die Außenringnut 26 begrenzenden Anlagefläche 30 und der Stufenkante 28 "eingeklemmt" angeordnet ist. Dabei ist es möglich, den erfindungsgemäßen Steckkraftanstieg genau zu definieren bzw. zu steuern, indem beispielsweise die Stufenkante 28 entsprechend geformt wird. Im dargestellten, bevorzugten Ausführungsbeispiel ist die Stufenkante 28 zwischen zwei insbesondere einen stumpfen Winkel α >90° bildenden, vorzugsweise konischen Flächenabschnitten 32,34 gebildet. Es tritt hierdurch beim axialen Komprimieren des Anschlagelementes 20 auch eine radiale Komprimierung in einem bestimmten Maß auf, wodurch der Steckkraftanstieg insgesamt beeinflußt werden kann.

Darüber hinaus läßt sich der Steckkraftanstieg auch durch eine spezielle Ausgestaltung der das Anschlagelement 20 aufnehmenden Ausnehmung, wie dargestellt der Außenringnut 26 des Steckerteils 4, beeinflussen. Wie dargestellt ist innerhalb der Ausnehmung bzw. Außenringnut 26 ein sich im wesentlichen radial erstreckender Ansatz 36, insbesondere in Form eines radialen Ringstegansatzes, derart gebildet , daß eine elastische Vorspannung durch bestimmte radiale Aufweitung des Anschlagelementes 20 erreicht wird. Diese Maßnahme bewirkt einen festen, sicheren Sitz des Anschlagelementes 20 in der Außenringnut 26. Der radiale Ansatz 36 bzw. der Ringstegansatz ist bevorzugt im etwa mittigen Bereich der Außenringnut 26 des Steckerteils 4 angeordnet. Das Anschlagelement 20 ist hierbei vorzugsweise als üblicher O-Ring mit im wesentlichen kreisförmigem Ringquerschnitt ausgebildet.

Diese zuletzt beschriebene Ausgestaltung ist insbesondere in Kombination mit einer speziellen Ausgestaltung der Verriegelungseinrichtung 12 von besonderem Vorteil, wenn nämlich durch die Verriegelungseinrichtung 12 eine ganz gesteckte und damit der schon erläuterten Steckposition (Fig. 1a) entsprechende Vollraststellung sowie andererseits aber auch eine Vorarretierung in einer teilgesteckten Stellung gewährleistet ist. In der teilgesteckten Stellung liegt dann zweckmäßigerweise eine derart unvollständige Abdichtung vor, daß im Falle einer Druckbeaufschlagung ein Signal insbesondere in Form eines akustisch wahrnehmbaren Leckgeräusches erzeugt wird. In der Vollraststellung liegt natürlich eine vollständige, druckdichte Abdichtung vor. Somit tritt in der teilgesteckten Vorarretierungsstellung (Fig. 1b) eine definierte Leckageströmung auf. Hierbei ist die oben erläuterte Maßnahme zur Erzeugung einer elastischen, radialen Vorspannung des Anschlagelementes 20 insofern von Vorteil, als hierdurch - bedingt durch die elastische Aufweitung des Ringes 24 - eine Sicherung gegen "Ausblasen" bzw. "Auswaschen" des Ringes 24 aus der Außenringnut 26 erreicht wird.

Konkrete konstruktive Maßnahmen für eine solche, eine Vorarretierung gewährleistende Ausgestaltung der Verriegelungseinrichtung 12 sind - außer in der eingangs genannten EP-B-0 226 689 - auch in zahlreichen älteren Anmeldungen der Anmelderin beschrieben. Beispielsweise wird in vollem Umfang auf die deutschen Patentanmeldungen 195 22 052.8, 195 23 830.3, 195 23 831.1 und 195 23 833.8 verwiesen, in denen jeweils eine "Doppelrastung" mit einer Vorarretierung durch formschlüssiges Einrasten eines Rastelementes erreicht wird. Ferner sei auf eine deutsche Anmeldung mit dem internen Vertreter-Aktenzeichen 7947 verwiesen, worin eine Vorarretierung insbesondere durch Kraft- oder Kraftformschluß offenbart ist.

Das in der Zeichnung dargestellte Ausführungsbeispiel der Verriegelungseinrichtung 12 entspricht der Ausführung gemäß der deutschen Patentanmeldung 196 21 535.8. Demnach besteht das Halteelement 18 aus einem in der Ausnehmung 14 sitzenden Trägerelement 38 und zwei in dem Trägerelement 38 derart elastisch verformbar gehalterten und derart axial hintereinander angeordneten Rastelementen 40, 42, daß die Rastkante 16 in der Vorarretierstellung - siehe Fig. 1b - von dem einen Rastelement 42 und in der Vollraststellung - Fig. 1a - von dem anderen Rastelement 40 hintergriffen wird.

Für die bevorzugt vorgesehene Vorarretierstellung nach Fig. 1b ist es wegen der auftretenden definierten Leckageströmung zudem vorteilhaft, auch die Haupt-Umfangsdichtung 10 gegen ein "Ausblasen" zu schützen. Konkrete Maßnahmen hierfür sind in der älteren Patentanmeldung der Anmelderin 195 36 333.7 offenbart. Wie dargestellt ist beispielsweise die Umfangsdichtung 10 derart ausgebildet, daß sie bereits in der Vorarretierstellung über umfänglich verteilt voneinander beabstandet angeordnete Anlagestellen 44 in radialer Richtung an der Innenfläche der Aufnahmeöffnung 8 anliegt. Jeweils in Umfangsrichtung zwischen den Anlagestellen 44 sind axiale Leckagepfade gebildet. Zweckmäßigerweise besteht die Umfangsdichtung 10 aus einem elastischen Profilring, der in zwei axial benachbarte Bereiche unterteilt ist, und zwar in einen Dichtbereich mit einem über den Umfang hinweg im wesentlichen konstanten Ringquerschnitt sowie einen Leckagebereich aus einander in Umfangsrichtung abwechselnden, die Anlagestellen 44 bildenden Anlageabschnitten und radialen, die Leckagepfade bildenden Aussparungen. In der genannten Anmeldung sind noch weitere Alternativen offenbart, so daß auf diese Anmeldung ebenfalls in vollem Umfang Bezug genommen wird.

Es ist vorteilhaft, wenn das Anschlagelement 20 bzw. der Ring 24 im Bereich zwischen der Haupt-Umfangsdichtung 10 und der einsteckseitigen Mündung der Aufnahmeöffnung 8 angeordnet ist. Hierdurch wirkt der elastische Ring 24 vorteilhafterweise in der Vollraststellung gemäß Fig. 1a zusätzlich als Abdichtung gegen ein Eindringen von Schmutz, Feuchtigkeit und dergleichen, d.h. als sogenannte "Staubdichtung". Zudem bewirkt das elastische Anschlagelement 20 vorteilhafterweise in der Steckposition (Fig.1a) auch einen Ausgleich bzw. eine Vermeidung von axialem Bewegungspiel des Steckerteils 4, indem es das Steckerteil 4 in Löserichtung mit einer Vorspannkraft (Federkraft) beaufschlagt, so daß das Steckerteil 4 über das Halteelement 18 stets in Anlage am Aufnahmeteil 2 gehalten wird.

Es sei noch erwähnt, daß bevorzugt vorgesehen ist, daß zwecks Lösbarkeit des durch die Verriegelungseinrichtung 12 arretierten Steckerteils 4 das Aufnahmeteil 2 derart aus zwei lösbar verbundenen Teilen, einem Basisteil 2a und einem bevorzugt als Überwurfschraube ausgebildeten Einsatzteil 2b, besteht, daß nach Lösen des Einsatzteils 2b vom Basisteil 2a das Steckerteil 4 zusammen mit einem Bestandteil der Verriegelungseinrichtung 12, d.h. mit dem Halteelement 18, und mit dem Einsatzteil 2b entnommen werden kann.

## Patentansprüche

1. Steckkupplung für Druckmittelsysteme, bestehend aus zwei Kupplungsteilen, und zwar einem Aufnahmeteil (2) und einem Steckerteil (4), wobei das Steckerteil (4) mit einem Steckerschaft (6) umfangsgemäß abgedichtet in eine Aufnahmeöffnung (8) des Aufnahmeteils (2) einsteckbar und in einer Steckposition über eine Verriegelungseinrichtung (12) gegen Lösen arretierbar ist, wobei die Verriegelungseinrichtung (12) mindestens ein elastisches, in einer Ausnehmung (14) des einen Kupplungsteils (2) gelagertes und in der Steckposition eine Rastkante (16) des anderen Kupplungsteils (4) rastend hintergreifendes Halteelement (18) aufweist, wobei ein aus einem elastisch verformbaren Material bestehender Ring (24) in einer radialen Ausnehmung des einen Kupplungsteils sitzt und mit einer Stufenkante (28) des anderen Kupplungsteils im gesteckten Zustand zusammenwirkt,
**dadurch gekennzeichnet, dass** der zwischen den beiden Kupplungsteilen (2, 4) wirkende elastische Ring (24) ein Anschlagelement (20) derart bildet, dass bei der Einsteckbewegung des Steckerteils (4) bei oder kurz hinter Erreichen der Steckposition durch das bereichsweise axial zwischen den Kupplungsteilen (2, 4) einen Anlagekontakt bewirkende Anschlagelement (20) ein erfaßbarer Anstieg der zum Stecken aufzuwendenden Steckkraft (F) hervorgerufen wird, wobei die Stufenkante (28) zwischen zwei einen Winkel bildenden, konischen Flächenabschnitten (32, 34) gebildet ist, und wobei innerhalb der das Anschlagelement (20) aufnehmenden Ausnehmung (26) ein sich im wesentlichen radial erstreckender Ansatz (36) derart gebildet ist, dass eine radiale elastische Vorspannung des Anschlagelementes (20) erreicht wird.

2. Steckkupplung nach Anspruch 1,
**dadurch gekennzeichnet, dass** der elastieche Ring (24) in einer Außenringnut (26) des Steckerteils (4) sitzt und die Stufenkante (28) in dem Aufnahmeteil (2) den Querschnitt der Aufnahmeöffnung (8) reduzierend angeordnet ist.

3. Steckkupplung nach Anspruch 1 oder 2,
**dadurch gekennzeichnet, dass** die die Stufenkante (28) bildenden, konischen Flächenabschnitte (32, 34) einen stumpfen Winkel α > 90° einschließen.

4. Steckkupplung nach einem der Ansprüche 1 bis 3,
**dadurch gekennzeichnet, dass** der radiale Ansatz (36) in der das Anschlagelement (20) aufnehmenden Ausnehmung (26) als Ringstegansatz ausgebildet ist.

5. Steckkupplung nach einem der Ansprüche 1 bis 4,
**dadurch gekennzeichnet, dass** das Anschlagelement (20) als O-Ring mit im wesentlichen kreisförmigem Ringquerschnitt ausgebildet ist.

6. Steckkupplung nach einem der Ansprüche 1 bis 5,
**dadurch gekennzeichnet, dass** die Verriegelungseinrichtung (12) derart ausgebildet ist, dass eine ganz gesteckte, der Steckposition entsprechende Vollraststellung sowie eine Vorarretierung in einer teilgesteckten Stellung gewährleistet sind, wobei vorzugsweise in der teilgesteckten Stellung eine derart unvollständige Abdichtung vorliegt, dass im Falle einer Druckbeaufschlagung mit einem Druckmedium ein Signal, insbesondere ein akustisch wahrnehmbares Leckgeräusch, erzeugt wird.

7. Steckkupplung nach einem der Ansprüche 1 bis 6,
**dadurch gekennzeichnet, dass** das Anschlagelement (20) im Bereich zwischen einer als Haupt-Druckdichtung vorgesehenen Umfangsdichtung (10) und der einsteckseitigen Mündung der Aufnahmeöffnung (8) angeordnet ist.

8. Steckkuppiung nach einem der Ansprüche 1 bis 7,
**dadurch gekennzeichnet, dass** das Anschlagelement (20) in der Steckposition das Steckerteil (4) in Löserichtung mit einer elastischen Vorspannkraft beaufschlagt und dadurch einen Ausgleich von axialem Bewegungsspiel bewirkt.

## Claims

1. Plug-in coupling for pressure medium systems, comprising two coupling parts, specifically a receiving part (2) and a plug part (4), it being possible for the plug part (4) to be plugged into a receiving opening (8) in the receiving part (2) by way of a plug shank (6) in a manner so as to be circumferentially sealed, and to be locked in a plug-in position by means of a locking device (12) against becoming detached, the locking device (12) having at least one elastic retaining element (18) which is mounted in a recess (14) in the one coupling part (2) and, in the plug-in position, reaching in a latching manner behind a latching edge (16) of the other coupling part (4), a ring (24) consisting of an elastically deformable material being seated in a radial recess in the one coupling part and, in the plugged-in state, interacting with a stepped edge (28) of the other coupling part, **characterized in that** the elastic ring (24) which acts between the two coupling parts (2, 4) forms a stop element (20) in such a manner that during the plug-in movement of the plug part (4) on or shortly after reaching the plug-in position, the stop element (20), which brings about a bearing contact axially in some regions between the coupling part (2, 4), gives rise to a detectable increase in the plug-in force (F) which is to be used for the plugging-in, the stepped edge (28) being formed between two conical surface sections (32, 34) which form an angle, and within the recess (26) which receives the stop element (20) an essentially radially extending projection (36) is formed in such a manner that a radial, elastic prestressing of the stop element (20) is achieved.

2. Plug-in coupling according to Claim 1, **characterized in that** the elastic ring (24) is seated in an outer annular groove (26) of the plug part (4) and the stepped edge (28) is arranged in the receiving part (2) in the manner reducing the cross section of the receiving opening (8).

3. Plug-in coupling according to Claim 1 or 2, **characterized in that** the conical surface sections (32, 34) which form the stepped edge (28) enclose an obtuse angle α > 90°.

4. Plug-in coupling according to one of Claims 1 to 3, **characterized in that** the radial projection (36) is designed as a ring-land projection in the recess (26) which receives the stop element (20).

5. Plug-in coupling according to one of Claims 1 to 4, **characterized in that** the stop element (20) is designed as an O-ring having an essentially circular annular cross section.

6. Plug-in coupling according to one of Claims 1 to 5, **characterized in that** the locking device (12) is designed in such a manner that a wholly plugged-in, fully latched position, which corresponds to the plug-in position, and preliminary retention in a partially plugged-in position are ensured, there preferably being incomplete sealing in the partially plugged-in position in such a manner that, in the event of pressure being applied by a pressure medium, a signal, in particular an acoustically perceptible leakage noise, is produced.

7. Plug-in coupling according to one of Claims 1 to 6, **characterized in that** the stop element (20) is arranged in the region between a circumferential seal (10), which is provided as the main pressure seal, and the mouth of the receiving opening (8) on the plug-in side.

8. Plug-in coupling according to one of Claims 1 to 7, **characterized in that** the stop element (20) acts, in the plug-in position, on the plug part (4) in the release direction with an elastic prestressing force and thereby compensates for any axial movement clearance.

## Revendications

1. Raccord emboîtable pour systèmes de fluides sous pression, comprenant deux parties d'accouplement, à savoir une partie logement (2) et une partie à emboîter (4), la partie à emboîter (4) avec un corps (6) pouvant être emboîtée de manière étanche sur sa périphérie dans une ouverture de réception (8) de la partie logement (2) et être bloquée pour empêcher la séparation dans une position d'emboîtement par l'intermédiaire d'un dispositif de verrouillage (12), le dispositif de verrouillage (12) présentant au moins un élément de retenue (18) élastique monté dans un creux (14) d'une des parties d'accouplement (2) et s'engageant en bloquant, dans la position d'emboîtement, derrière une arête de blocage (16) de l'autre partie d'accouplement (4), une bague (24) réalisée dans un matériau élastiquement déformable étant située dans un creux radial d'une partie d'accouplement et coopérant avec un bord étagé (28) de l'autre partie d'accouplement dans la position d'emboîtement, **caractérisé en ce que** :
la bague élastique (24) agissant entre les deux parties d'accouplement (2, 4) forme un élément de butée (20) de telle sorte que, lors du mouvement d'emboîtement de la partie à emboîter (4), au moment d'atteindre la position d'emboîtement ou juste après l'avoir atteinte, l'élément de butée (20) provoquant un contact d'appui par endroits dans le sens axial entre les parties d'accouplement (2, 4) produit une augmentation sensible de la force d'enfoncement (F) à employer pour emboîter, le bord étagé (28) étant formé entre deux sections de surface (32, 34) côniques formant un angle, et un épaulement (36) s'étendant essentiellement dans le sens radial à l'intérieur du creux (26) recevant l'élément de butée (20), de manière à obtenir une précontrainte élastique radiale de l'élément de butée (20).

2. Raccord à emboîtement selon la revendication 1,
**caractérisé en ce que** la bague élastique (24) est située dans une rainure annulaire extérieure (26) de la partie à emboîter (4) et le bord étagé (28) est disposé dans la partie logement (2) de façon à réduire la section de l'ouverture de réception (8).

3. Raccord à emboîtement selon la revendication 1 ou 2,
**caractérisé en ce que** les sections de surface (32, 34) côniques formant le bord étagé (28) forment un angle obtus α > 90°.

4. Raccord à emboîtement selon l'une quelconque des revendications 1 à 3,
**caractérisé en ce que** l'épaulement radial (36) situé dans le creux (26) recevant l'élément de butée (20) est conçu comme un épaulement à nervure annulaire.

5. Raccord à emboîtement selon l'une quelconque des revendications 1 à 4,
**caractérisé en ce que** l'élément de butée (20) est conçu comme un anneau torique avec une section annulaire essentiellement circulaire.

6. Raccord à emboîtement selon l'une quelconque des revendications 1 à 5,
**caractérisé en ce que** le dispositif de verrouillage (12) est conçu de manière à permettre une position de blocage complet avec emboîtement total, correspondant à la position d'emboîtement, ainsi qu'un préblocage dans une position d'emboîtement partiel, une étanchéité incomplète subsistant de préférence dans la position d'emboîtement partiel de sorte que, en cas de pression exercée par un fluide sous pression, un signal, en particulier un bruit de fuite perceptible acoustiquement, est produit.

7. Raccord à emboîtement selon l'une quelconque des revendications 1 à 6,
**caractérisé en ce que** l'élément de butée (20) est disposé dans la zone entre un joint périphérique (10) prévu comme joint d'étanchéité à la pression principale et l'embouchure côté emboîtement de l'ouverture de réception (8).

8. Raccord à emboîtement selon l'une quelconque des revendications 1 à 7,
**caractérisé en ce que** l'élément de butée (20), dans la position d'emboîtement, exerce sur la partie à emboîter (4) une force de précontrainte dans le sens de la séparation et entraîne ainsi un équilibrage de jeu du mouvement axial.
